# EUROPÄISCHE PATENTSCHRIFT

(11) **EP 2 514 628 B1**
(45) Veröffentlichungstag und Bekanntmachung des Hinweises auf die Patenterteilung: **31.07.2019**
(21) Anmeldenummer: 12164563.4
(22) Anmeldetag: 18.04.2012
(51) Int. Cl.: B60L 50/50, B60L 3/12

(54) **Vorrichtung und Verfahren zur Bereitstellung elektrischer Energie**
Device and method for producing electrical energy
Dispositif et procédé de préparation d'énergie électrique

(30) Priorität: 19.04.2011 DE 102011007688
(43) Veröffentlichungstag der Anmeldung: 24.10.2012
(73) Patentinhaber: Elektro-Bauelemente GmbH, 44536 Lünen (DE)
(72) Erfinder: Kachouh, Checrallah, 44227 Dortmund (DE); Heitbrink, Axel, 59387 Ascheberg (DE); Klopf, Thomas, 46499 Hamminkeln (DE)
(74) Vertreter: Wickord, Wiro

(56) Entgegenhaltungen:
- DE-A1-102009 039 651
- DE-T2- 69 523 456
- US-A1- 2010 188 042
- US-A1- 2010 228 405

## Beschreibung

Die Erfindung betrifft eine Vorrichtung zur Bereitstellung von elektrischer Energie für elektrisch betreibbare Fahrzeuge nach dem Oberbegriff des Patentanspruchs 1.

Gattungsgemäße Vorrichtungen werden als Ladestationen in zunehmender Zahl beispielsweise auf Parkplätzen oder in der heimischen Garage installiert, um elektrisch betreibbare Fahrzeuge, insbesondere mit einem Elektromotor und einem Verbrennungsmotor ausgestattete Hybridfahrzeuge oder reine Elektrofahrzeuge, mit elektrischer Energie zu versorgen. Derartige Vorrichtungen weisen heute eine Steuereinrichtung zur Steuerung der Ladestation und ihrer Funktionskomponenten. Aus der DE 10 2009 034 887 A1 ist bekannt, die Steuereinrichtung mit einem zentralen Rechenmodul auszustatten. Das zentrale Rechenmodul wirkt mit einem Energiemengenzähler, einer Kommunikationseinheit, einem an ein elektrisches Versorgungsnetz angeschlossenen Steckelement sowie dem Steckelement zugeordneten Sicherungs- und Überwachungseinrichtungen zusammen. Das Rechenmodul verarbeitet die von diversen Sensoren ermittelten bzw. über die Kommunikationseinheit empfangenen Daten und trägt Sorge dafür, dass die Ladestation sicher betrieben werden kann. Kommt es zu einem Ausfall des zentralen Rechenmoduls, fällt die Ladestation aus.

Ladestation mit verteilt angeordneten Steckelementen und einer Steuereinrichtung mit einer zentralen Steuereinheit und den verschiedenen Steckelementen zugeordneten dezentralen Steuereinheit sind aus der DE 695 23 456 T2 und der US 2010/228405 A1 bekannt.

Die US2010/0188042 offenbart zudem eine Überstrom Schutzvorrichtung für eine Ladestation.

Aufgabe der vorliegenden Erfindung ist es, eine Vorrichtung zur Bereitstellung elektrischer Energie für elektrisch betreibbare Fahrzeuge derart weiterzubilden, dass die Verfügbarkeit verbessert wird.

Zur Lösung der Aufgabe weist die Erfindung die Merkmale des Patentanspruchs 1 auf.

Der besondere Vorteil der Erfindung besteht darin, dass durch das Vorsehen einer Mehrzahl von Steuereinheiten hardwareseitig eine Redundanz geschaffen wird mit der Folge, dass der Ausfall einer Steuereinheit durch die weiter fehlerfrei arbeitenden anderen Steuereinheiten ausgeglichen werden kann oder sicher erkannt wird. Beispielsweise bemerkt der Kunden keine Beeinträchtigung, wenn die zentrale Steuereinheit kurzzeitig ausfällt und neu startet werden muss und die dezentrale Steuereinheiten den Ladevorgang in der Zwischenzeit aufrecht erhalten. Der Ausfall einer einzigen Steuereinheit führt daher nicht zu einem dauerhaften Ausfall oder zu einer für einen Kunden wahrnehmbaren Beeinträchtigung der Funktion der Vorrichtung. Zudem können sich die Steuereinheiten wechselseitig überwachen, so dass ein Ausfall sicher erkannt wird.

Darüber hinaus ist eine hierarchische Systemstruktur mit einer zentralen Steuereinheit und den Steckelementen zugeordneten dezentralen Steuereinheiten vorgesehen. Die hierarchische Struktur ist für den Betrieb einer Vorrichtung mit mehr als einem Steckelement besonders geeignet, da zentrale Programmroutinen zum Betrieb der Vorrichtung von der zentralen Steuereinheit ausgeführt werden können. Demgegenüber können für die Ansteuerung der einzelnen Steckelemente erforderliche Programmroutinen durch die dezentralen Steuereinheiten ausgeführt werden.

Zur Verbindung der Ladestation mit dem elektrisch betreibbaren Fahrzeug kann ein externes Ladekabel vorgesehen sein, welches mit dem Steckelement der Ladestation einerseits und dem Gegensteckelement des Fahrzeugs andererseits verbunden wird. Typischerweise sind das Steckelement der Ladestation und das Gegensteckelement des Fahrzeugs hierbei als Steckdosen ausgebildet; das externe Ladekabel weist üblicherweise an den beiden Endseiten desselben in die Steckdosen einsetzbare Stecker auf. Ebenfalls ist bekannt, dass das Ladekabel als ein integriertes Ladekabel fester Bestandteil der Ladestation ist. An einem einzigen freien Ende des Ladekabels ist in diesem Fall üblicherweise eine Kupplung als Steckelement vorgesehen, welche in eine als Gegensteckelement dienende Steckdose des Fahrzeugs einsetzbar ist. Insofern kann die Ladestation entweder über ein externes Ladekabel oder über das integrierte interne Ladekabel mit dem Fahrzeug verbunden werden.

Nach einer bevorzugten Ausführungsform der Erfindung sind ein Rechenmodul der zentralen Steuereinheit und ein Rechenmodul der dezentralen Steuereinheit derart ausgestaltet, dass gleichartige Programmroutinen zum Betrieb der Vorrichtung wahlweise auf dem Rechenmodul der zentralen Steuereinheit und/oder auf dem Rechenmodul der dezentralen Steuereinheit ausführbar sind. Beispielsweise können sicherheitskritische Programmroutinen sowohl von der zentralen Steuereinheit als auch von der dezentralen Steuereinheit ausgeführt und die Ergebnisdaten verglichen werden, um eine Redundanz zu schaffen und Fehlfunktionen vorzubeugen. Gleichartige Programmroutinen führen insofern die gleiche Aufgabe aus. Eine Identität der Programmroutine, insbesondere hinsichtlich des Quellcodes oder der Programmiersprache, ist nicht zwingend. Beispielsweise können in der zentralen Steuereinheit und in den dezentralen Steuereinheiten identische Rechenmodule vorgesehen sein.

Nach einer Weiterbildung der Erfindung weist die zentrale Steuereinheit einen Sicherheitsdatenspeicher auf, der derart ausgebildet ist, dass in dem Sicherheitsdatenspeicher Ergebnisdaten von Programmroutinen abgelegt werden, die von der dezentralen Steuereinheit ausgeführt worden sind. Ferner weist wenigstens eine dezentrale Steuereinheit einen Sicherheitsdatenspeicher auf, der derart ausgelegt ist, dass in dem Sicherheitsdatenspeicher Ergebnisdaten von Programmroutinen abgelegt werden, die von der zentralen Steuereinheit ausgeführt worden sind. Vorteilhaft können Ergebnisdaten schnell verglichen und verifiziert werden mit der Folge, dass Fehlfunktion sicher erkannt und Maßnahmen zur Behebung der Fehlfunktion eingeleitet werden können. Zudem kann durch die wechselseitige Bereitstellung der Ergebnisdaten in den Steuereinheiten ein Vergleich auch durchgeführt werden, wenn eine Steuereinheit vorübergehend ausgefallen und momentan neu gestartet wird.

Nach der Erfindung ist eine zu der Anzahl der Steckelement korrespondierende Anzahl von Messeinheiten vorgesehen, die mit der zentralen Steuereinheit zusammenwirken und dazu dienen, den Iststrom zu messen, der jeder einzelnen Steckelement zugeführt wird. Beispielsweise können die Messeinheiten als Strommesseinheiten oder als Leistungsmesseinheiten ausgebildet sein. Vorteilhaft besteht hierdurch die Möglichkeit, den Ladestrom direkt oder indirekt zu überwachen und im Fehlerfall Maßnahmen zur Sicherung des Systems zu veranlassen, so dass sich die Sicherheit erhöht.

Beim Betrieb der erfindungsgemäßen Vorrichtung kann ein Verfahren genutzt werden mit den folgenden Verfahrensschritten:
- zunächst wird entweder ein versorgungsleitungsseitig maximal zulässiger Ladestrom und ein vorrichtungsseitig maximal zulässiger Ladestrom oder - sofern die Vorrichtung über ein externes Ladekabel elektrisch und/oder mechanisch mit dem Fahrzeug verbunden - ein versorgungsleitungsseitig maximal zulässiger Ladestrom, ein vorrichtungsseitig maximal zulässiger Ladestrom und ein ladekabelseitig maximal zulässiger Ladestrom werden verglichen und
- dann wird ein Sollladestrom vorgegeben, der kleiner oder gleich einem Minimum der verglichenen Ladeströme ist.

Vorteilhaft wird hierdurch sichergestellt, dass - sofern vorhanden - weder ein externes Ladekabel noch die Vorrichtung beschädigt werden und dass die Versorgungsleitung nicht unzulässig belastet ist. Der versorgungsleitungsseitig maximal zulässige Ladestrom wird beispielsweise von extern an die Steuereinrichtung der Ladestation gesendet. Beispielsweise kommuniziert eine zentrale Steuereinheit der Steuereinrichtung zu diesem Zweck mit einem dem Versorgungsnetz zugeordneten Serviceeinheit. Der vorrichungsseitig maximale Ladestrom kann als konstanter Wert in einem Datenspeicher der Steuereinrichtung abgespeichert sein.

Üblicherweise wird der so von der Steuereinrichtung ermittelte Sollladestrom bzw. maximale Ladestrom an das Fahrzeug übertragen. Eine in dem Fahrzeug vorgesehene Steuerung ist so ausgelegt, dass der von dem Fahrzeug gezogene Ladestrom den maximalen Ladestrom nicht überschreitet und alle Komponenten vor einer Beschädigung geschützt werden.

Der Sollladestrom kann regelmäßig neu bestimmt werden, da der versorgungsleitungsseitig maximal zulässige Ladestrom z.B. infolge der Belastung der Versorgungsleitung durch andere Abnehmer als der Vorrichtung selbst starken Schwankungen unterliegen kann. Beispielsweise kann aus einer mit der Belastung der Versorgungsleitung variierenden Netzfrequenz auf den versorgungsleitungsseitig maximal zulässigen Ladestrom geschlossen werden. Beispielsweise kann der Sollladestrom von einer einzigen Steuereinheit bestimmt werden.

Nach einer bevorzugten Ausführungsform des Verfahrens werden der Sollladestrom, der versorgungsleitungsseitig maximal zulässige Ladestrom, der vorrichtungsseitig maximal zulässige Ladestrom bzw. der ladekabelseitig maximal zulässige Ladestrom von einer ersten Steuereinheit und von einer zweiten Steuereinheit der Vorrichtung separat bestimmt, miteinander verglichen bzw. abgespeichert. Vorteilhaft kann der Sollladestrom unabhängig von zwei oder mehr Steuereinheiten bestimmt werden, so dass eine Redundanz geschaffen wird und eine Fehlfunktion, die die Betriebssicherheit beeinflusst oder zu einem Hardwaredefekt führen kann, vermieden wird. Kommt es beispielsweise zur Bestimmung abweichender Sollladeströme, kann auf den Defekt wenigstens einer Steuereinheit geschlossen und eine Steuereinheit abgeschaltet bzw. neu gestartet werden. Insbesondere kann die Information über den Sollladestrom als sicherheitskritischer und funktionsrelevanter Betriebsparameter in der ersten Steuereinheit (zentrale Steuereinheit) und in der zweiten Steuereinheit (dezentrale Steuereinheit) abgespeichert werden.

Kemgedanke ist es, dass die Sicherheit der Vorrichtung durch die Schaffung einer hardwareseitigen und softwareseitigen Redundanz grundlegend erhöht wird. Einer Fehlfunktion der Vorrichtung ist hierdurch in besonders effektiver Weise vorgebeugt.

Die Steuereinheiten können zudem unterschiedliche Aufgaben wahrnehmen. Beispielsweise kann die erste Steuereinheit als eine zentrale Steuereinheit und die zweite Steuereinheit als eine dezentrale Steuereinheit eines mit einer elektrischen Versorgungsleitung elektrisch leitend verbundenen Steckelements ausgebildet sein. Die dezentrale Steuereinheit kann beispielsweise mit dem elektrisch betreibbaren Fahrzeug kommunizieren, etwa via PWM-Signal oder Power Line Kommunikation (PLC). Die zentrale Steuereinheit kann beispielsweise via TCP/IP-Kommunikation mit einer übergeordneten Serviceeinheit, dem Netzbetreiber oder anderen Ladestationen kommunizieren.

Nach einer Weiterbildung des Verfahrens werden in dem Ladekabel kodiert gespeicherte Kenndaten in der ersten Steuereinheit und in der zweiten Steuereinheit dekodiert. Die dekodierten Daten der ersten Steuereinheit und der zweiten Steuereinheit werden miteinander verglichen. Vorteilhaft wird hierdurch sichergestellt, dass auch die Kenndaten des Ladekabels durch zwei unabhängige Instanzen (Steuereinheiten) bestimmt werden und redundant vorliegen. Auf Basis des Vergleichsergebnisses können dann adäquate Maßnahmen veranlasst werden.

Nach einer Weiterbildung des Verfahrens werden als Kenndaten Informationen über eine ladekabelseitig maximal zulässigen Ladestrom widerstandskodiert empfangen. Wird das Ladekabel mit einem unzulässig hohen Ladestrom beaufschlagt, kann es zu einer Überlastung des Ladekabels kommen mit der Folge, dass das Ladekabel irreparabel geschädigt ist. Es ist daher essentiell wichtig, dass der maximal zulässige Ladestrom von beispielsweise 13 Ampere, 20 Ampere, 32 Ampere oder 64 Ampere nicht überschritten wird. Da jedoch zugleich die Ladedauer mit steigendem Ladestrom reduziert wird, soll nicht mit einem unnötig geringen Ladestrom geladen werden. Demzufolge ist das Erkennen des ladekabelseitig maximal zulässigen Ladestroms von erheblicher Bedeutung. Die Information über den ladekabelseitig maximal zulässigen Ladestrom ist üblicherweise in den endseitig vorgesehenen Steckern des Ladekabels widerstandskodiert abgelegt.

Nach einer Weiterbildung des Verfahrens wird der von der ersten Steuereinheit ein über eine Messeinheit ermittelter Istladestrom mit dem Sollladestrom verglichen. Bei einer unzulässig großen Abweichung wird eine Anpassung des Sollladestroms an den Istladestrom veranlasst oder der Ladevorgang unterbrochen wird. Beispielsweise wird der Ladevorgang unterbrochen, indem die Spannung abgeschaltet wird. Ebenfalls kann der Istladestrom angepasst werden, indem von der Ladestation an das Fahrzeug ein verändertes Istladestrom-Signal übertragen wird. Beispielsweise können die erste Steuereinheit als zentrale Steuereinheit und die zweite Steuereinheit als eine dezentrale Steuereinheit der Vorrichtung ausgebildet sein. In diesem Fall kann die zentrale Steuereinheit den Istladestrom messen, und die dezentrale Steuereinheit kann die Kommunikation mit dem Fahrzeug abwickeln. Insofern überprüft die zentrale Steuereinheit anhand der Strommessung, ob der von der dezentralen Steuereinheit an das Fahrzeug übermittelte Sollladestrom korrekt eingehalten wird.

Nach einer Weiterbildung des Verfahrens werden eine einwandfreie Funktion der ersten Steuereinheit und eine einwandfreie Funktion der zweiten Steuereinheit mittels Prüfroutinen überprüft. Nicht einwandfreie arbeitende Steuereinheiten werden deaktiviert oder neu gestartet (resettet). Vorteilhaft kann durch die Deaktivierung bzw. den Neustart nicht einwandfrei arbeitender Steuereinheiten einer unerwünschten bzw. sicherheitskritischen Fehlfunktion der Vorrichtung vorgebeugt werden. Dies ist beispielsweise der Fall, wenn sich bei redundant ausgeführten Programmroutinen unzulässige Abweichungen zeigen. Darüber hinaus kann die Verfügbarkeit der einzelnen Steuereinheiten mittels unabhängiger Programmroutinen kontinuierlich überwacht werden, um etwa den Ausfall einzelner Steuereinheiten zeitnah zu erkennen. Dies kann beispielsweise über geeignet ausgebildete Hand-Shake-Signale, welche zwischen den Steuereinheiten ausgetauscht werden, bewirkt werden.

Beispielsweise kann die Steuereinrichtung so ausgebildet sein, dass die zentrale Steuereinheit als erste Steuereinheit die zweite, dezentrale Steuereinheit resetten kann. Es muss nicht zwingend vorgesehen sein, dass die zweite Steuereinheit die erste Steuereinheit resetten kann.

Weitere Vorteile der Erfindung ergeben sich aus den weiteren Unteransprüchen,

Die Erfindung wird nachfolgend anhand von Zeichnungen näher erläutert.

Es zeigen:
- Figur 1: eine Prinzipdarstellung einer erfindungsgemäßen Vorrichtung und
- Figur 2: ein Blockschaltbild eines Verfahrens.

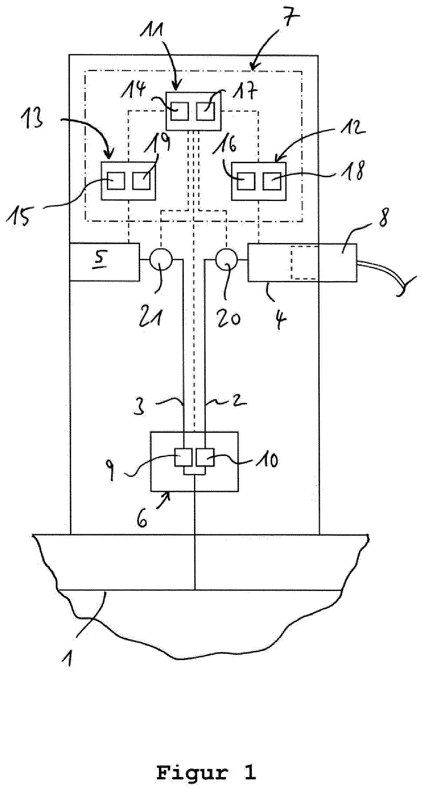

Eine erfindungsgemäße Vorrichtung gemäß Figur 1 ist nach Art einer Ladesäule ausgebildet. Die Vorrichtung umfasst als wesentliche Komponenten zwei mit einer elektrischen Versorgungsleitung 1 über individuelle Zuführleitungen 2, 3 elektrisch leitend verbundene Steckelemente 4, 5, eine Schalteinrichtung 6 zum individuellen Ein- und Ausschalten der Steckelemente 4, 5 sowie eine Steuereinrichtung 7, die datentechnisch mit den zwei Steckelementen 4, 5 und mit der Schalteinrichtung 6 zusammenwirkt.

Derartige Ladesäulen werden beispielsweise auf öffentlichen Parkplätzen bereitgestellt, um einen elektrischen Energiespeicher eines elektrisch betreibbaren Fahrzeugs zu laden. Hierzu wird ein mit dem Energiespeicher des Fahrzeugs elektrisch leitend verbundenes externes Ladekabel 8 mit einem Steckelement 4 der Ladesäule verbunden. Die Steuereinrichtung 7 detektiert das an das Steckelement 4 angesetzte Ladekabel 8 und legt eine Spannung an das Steckelement 4 an, indem die Schalteinrichtung 6 betätigt wird. Um die Steckelemente 4, 5 individuell ein- und ausschalten zu können, weist die Schalteinrichtung 6 einen ersten Schalter 9 und einen zweiten Schalter 10 auf. Die Schalter 9, 10 können von der Steuereinrichtung 7 individuell betätigt werden.

Die Steuereinrichtung 7 weist eine Mehrzahl von Steuereinheiten 11, 12, 13 auf. Eine erste Steuereinheit 11 ist als eine zentrale Steuereinheit 11 ausgebildet. Weitere Steuereinheiten 12, 13 sind als dezentralen Steuereinheiten 12, 13 ausgebildet. Jede dezentrale Steuereinheit 12, 13 ist genau einem Steckelement 4, 5 zugeordnet. Die zentrale Steuereinheit 11 ist datentechnisch verbunden mit den dezentralen Steuereinheiten 12, 13 und der Schalteinrichtung 6. Über die dezentralen Steuereinheiten 12, 13 kommuniziert die zentralen Steuereinheit 11 zudem indirekt mit den Steckelementen 4, 5. Jede dezentrale Steuereinheit 12, 13 ist datentechnisch direkt mit dem ihr zugeordneten Steckelement 4, 5 sowie der zentralen Steuereinheit 11 verbunden. Über die zentrale Steuereinheit 11 sind die dezentralen Steuereinheiten 12, 13 zudem indirekt mit der Schalteinrichtung 6 datentechnisch gekoppelt. Die Vorrichtung ist so ausgelegt, dass die indirekte Kommunikation über eine zwischengeschaltete Funktionskomponente auch dann erhalten bleibt, wenn die zwischengeschaltete Funktionskomponente ausfällt.

Die Steuereinheiten 11, 12, 13 weisen jeweils ein Rechenmodul 14, 15, 16 sowie einen Sicherheitsdatenspeicher 17, 18, 19 auf. Das der zentralen Steuereinheit 11 zugeordnete Rechenmodul 14 und die den dezentralen Steuereinheiten 12, 13 zugeordneten Rechenmodule 15, 16 können baugleich ausgebildet sein. Der Sicherheitsdatenspeicher 17 der zentralen Steuereinheit 11 und die Sicherheitsdatenspeicher 18, 19 der dezentralen Steuereinheiten 12, 13 können ebenfalls baugleich sein.

Die zentrale Steuereinheit 11 ist datentechnisch verbunden mit zwei Messeinheiten 20, 21, welche den Zuführleitungen 2, 3 der Steckelemente 4, 5 zugeordnet sind. Die Messeinheiten 20, 21 dienen dazu, einen durch die Zuführleitungen 2, 3 fließenden Istladestrom - nach Steckelementen 4, 5 getrennt - zu erfassen. Die dezentralen Steuereinheiten 12, 13 sind über die zentrale Steuereinheit 11 indirekt mit den Messeinheiten 20, 21 gekoppelt.

Während des Betriebs der Ladestation führt die Steuereinrichtung 7 diverse Programmroutinen aus. Einzelne Programmroutinen werden hierbei von der zentralen Steuereinheit 11 ausgeführt. Insbesondere können dies übergeordnete Programmroutinen sein, beispielsweise Routinen zur Betätigung einer nicht dargestellten Kommunikationseinheit, über die die Ladestation mit einem Betreiber der Vorrichtung kommuniziert. Andere Programmroutinen werden dezentral in den dezentralen Steuereinheiten 12, 13 ausgeführt. Beispielsweise werden Programmroutinen, welche einen Ladevorgang über das Steckelement 4 betreffen, von der dem Steckelement 4 zugeordneten dezentralen Steuereinheit 12 ausgeführt. Insbesondere kann die Kommunikation mit dem Fahrzeug von der dezentralen Steuereinheit 12 durchgeführt werden.

Einzelne von der zentralen Steuereinheit 11 ausgeführte Programmroutinen liefern Ergebnisdaten, welche in den Sicherheitsdatenspeichern 18, 19 der dezentralen Steuereinheiten 12, 13 abgelegt werden. Ebenso werden Ergebnisdaten von Programmroutinen der dezentralen Steuereinheiten 12, 13 in dem Sicherheitsdatenspeicher 17 der zentralen Steuereinheit 11 abgelegt.

Für den sicheren Betrieb der Vorrichtung kritische Programmroutinen (Sicherheitsroutinen) bzw. für die Kontrolle der Funktion der Steuereinheiten 11, 12, 13 besonders geeignete Programmroutinen (Prüfroutinen) können von der zentralen Steuereinheit 11 und von wenigstens einer dezentralen Steuereinheit 12, 13 ausgeführt. Anhand der sowohl in den Sicherheitsdatenspeicher 17 der zentralen Steuereinheit 11 als auch der Sicherheitsdatenspeichern 18, 19 der dezentralen Steuereinheiten 12, 13 bereitstehenden Ergebnisdaten können die Ergebnisse der SIcherheits- und/oder Prüfroutinen besonders schnell und sicher verglichen werden. Sofern die Sicherheitsroutinen bzw. Prüfroutinen zu einem gleichen Ergebnis führen, wird auf eine korrekte Funktion aller Steuereinheiten 11, 12, 13 geschlossen. Kommt es jedoch zu Abweichungen bei der Ausführung der Kontroll- bzw. Sicherheitsroutinen, wird dies als Hinweis auf eine nicht einwandfreie Funktion wenigstens einer Steuereinheit 11, 12, 13 gewertet. In diesem Fall können weitere Prüfroutine durchgeführt werden zur Identifikation einer nicht einwandfrei arbeitenden Steuereinheit 11, 12, 13. Die nicht einwandfrei arbeitende Steuereinheit 11, 12, 13 wird nach ihrer Identifikation beispielsweise zeitweise deaktiviert oder neu gestartet.

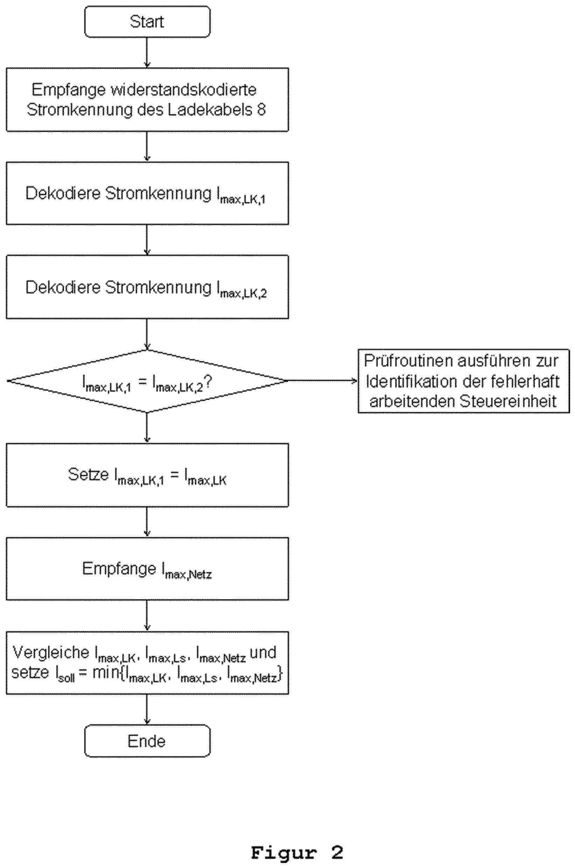

Exemplarisch zeigt Figur 2 ein Verfahren zum Betrieb der Vorrichtung. Beispielsweise wird das Ladekabel 8 mit einem nicht dargestellten dargestellten Fahrzeug verbunden und an das Steckelement 4 der Vorrichtung angesetzt. Die Steuereinrichtung 7 erkennt das Vorhandensein des Ladekabels 8. In Vorbereitung des Ladevorgangs wird aus dem Ladekabel 8 eine widerstandskodierte Stromkennung übertragen. Die Stromkennung gibt an, mit welchem Ladestrom I_{max,LK} das Ladekabel 8 maximal betrieben werden kann.

Die korrekte Dekodierung der Stromkennung und die Prüfung der Stromkennung auf Plausibilität sind von besonderer Bedeutung, da ein zu hoher Ladestrom I_{max,LK} das Ladekabel 8 irreparabel schädigen und zu sicherheitskritischen Fehler führen kann, während ein zu geringer Ladestrom I_{max,LK} die Ladedauer unnötig verlängert. Die Dekodierung der Stromkennung wird als Sicherheitsroutine behandelt und erfolgt in der Steuereinrichtung 7 sowohl in der dem Steckelement 4 zugeordneten dezentralen Steuereinheit 12 als auch in der zentralen Steuereinheit 11. Eine dekodierten Stromkennungen der zentralen Steuereinheit I_{max,LK,1} und der dezentralen Steuereinheit I_{max,LK,2} werden verglichen.

Stimmen die ermittelten dekodierten Stromkennungen I_{max,LK,1}, I_{max,LK,2} überein, wird die Vorrichtung normal weiter betrieben. Ein Sollladestrom Iₛₒₗₗ wird festgelegt, indem der ladekabelseitig zulässige Ladestrom I_{max,LK} mit dem vorrichtungsseitig maximal zulässigen Ladestrom I_{max,Ls} und dem versorgungsleitungsseitig maximal Ladestrom I_{max,Netz} verglichen wird und der Minimalwert der zulässigen Ladeströme I_{max,LK,} I_{max,Ls}, I_{max,Netz} als Sollladestrom Iₛₒₗₗ festgelegt wird.

Sofern die dekodierten Stromkennungen I_{max,LK,1} und I_{max,LK,2} voneinander abweichen, werden Prüfroutinen durchgeführt zur Identifikation der nicht korrekt arbeitetenden Steuereinheit 11, 12, 13. Beispielsweise kann - nachdem die dezentrale Steuereinheit 12 als nicht korrekt arbeitend identifiziert ist - die dezentrale Steuereinheit 12 von der zentralen Steuereinheit 11 neu gestartet.

Der Sollladestrom Iₛₒₗₗ wird von der Steuereinrichtung 7 mit dem durch die dem Steckelement 4 zugeordnete Messeinheit 20 ermittelt. Weichen der Sollladestrom Iₛₒₗₗ und der Istladestrom Iᵢₛₜ voneinander ab, gleicht die Steuereinrichtung 7 den Istladestrom Iᵢₛₜ an den Sollladestrom Iₛₒₗₗ an.

Als Fahrzeuge im Sinne der Erfindung gelten alle Automobile (PKW, LKW, Wohnmobile, Zweiräder usw.), Schienenfahrzeug (insbesondere Lokomotiven), Wasserfahrzeuge (Schiffe), Luftfahrzeuge sowie Anhänger (Wohnanhänger), mobile Verkaufsstände usw.

## Patentansprüche

1. Vorrichtung zur Bereitstellung von elektrischer Energie für elektrisch betreibbare Fahrzeuge mit mindestens einem Steckelement (4, 5), wobei das mindestens eine Steckelement (4, 5) leitend mit einer ortsfesten Versorgungsleitung (1) verbunden ist und über ein Gegensteckelement mit einem Energiespeicher des Fahrzeugs verbindbar ist, mit mindestens einer Schalteinrichtung (6) zum individuellen Ein- und Ausschalten des mindestens einen Steckelements (4, 5) und mit einer Steuereinrichtung (7), welche datentechnisch mit dem mindestens einen Steckelement und mit der Schalteinrichtung (6) zusammenwirkt, wobei die Steuereinrichtung (7) eine zentrale Steuereinheit (11) und eine zu der Anzahl der Steckelemente (4, 5) korrespondierende Anzahl von dezentralen Steuereinheiten (12, 13) aufweist, wobei jedem Steckelement (4, 5) eine dezentrale Steuereinheit (12, 13) zugeordnet ist und wobei die zentrale Steuereinheit (11) mit allen dezentralen Steuereinheiten (12, 13) datentechnisch verbunden ist, **dadurch gekennzeichnet, dass** die zentrale Steuereinheit (11) datentechnisch mit einer zu der Anzahl an Steckelementen (4, 5) korrespondierenden Anzahl an Messeinheiten (20, 21) zum individuellen Messen eines jedem Steckelement (4, 5) zugeführten Ladestroms (Iᵢₛₜ) verbunden ist und dass die Messeinheiten (20, 21) derart mit der zentralen Steuereinheit (11) zusammenwirken, dass der Ladestrom (Iᵢₛₜ) direkt oder indirekt überwacht wird und im Fehlerfall Maßnahmen zur Erhöhung der Sicherheit des Systems veranlasst werden.

2. Vorrichtung nach Anspruch 1, **dadurch gekennzeichnet, dass** ein Rechenmodul (14) der zentralen Steuereinheit (11) und Rechenmodule (15, 16) der dezentralen Steuereinheiten (12, 13) derart ausgestaltet sind, dass gleichartige Programmroutinen zum Betrieb der Vorrichtung auf dem Rechenmodul (14) der zentralen Steuereinheit (11) und/oder auf wenigstens einem Rechenmodul (15, 16) einer dezentralen Steuereinheiten (12, 13) ausführbar sind.

3. Vorrichtung nach Anspruch 1 oder 2, **dadurch gekennzeichnet, dass** die zentrale Steuereinheit (11) einen Sicherheitsdatenspeicher (17) aufweist, der derart ausgebildet ist, dass in dem Sicherheitsdatenspeicher (17) Ergebnisdaten von Programmroutinen abgelegt werden, die von der dezentralen Steuereinheit (12, 13) ausgeführt worden sind, und/oder dass wenigstens eine dezentrale Steuereinheit (12, 13) einen Sicherheitsdatenspeicher (18, 19) aufweist, der derart ausgelegt ist, dass in dem Sicherheitsdatenspeicher (18, 19) Ergebnisdaten von Programmroutinen abgelegt werden, die von der zentralen Steuereinheit (11) ausgeführt worden sind.

4. Vorrichtung nach einem der Ansprüche 1 bis 3, **dadurch gekennzeichnet, dass** die Messeinheiten (20, 21) als Strommesseinheiten und/oder als Leistungsmesseinheiten ausgebildet sind.

## Claims

1. Device for providing electrical energy for electrically operable vehicles comprising at least one plug element (4, 5), the at least one plug element (4, 5) being conductively connected to a fixed supply line (1) and connectable via a mating plug element to an energy store of the vehicle, comprising at least one switching device (6) for individually switching on and off the at least one plug element (4, 5), and comprising a control device (7), which cooperates in terms of data with the at least one plug element and with the switching device (6), the control device (7) having a central control unit (11) and a number of decentralised control units (12, 13) which corresponds to the number of plug elements (4, 5), a decentralised control unit (12, 13) being assigned to each plug element (4, 5), and the central control unit (11) being data-connected to all decentralised control units (12, 13), **characterised in that** the central control unit (11) is data-connected to a number of measurement units (20, 21) which corresponds to the number of plug elements (4, 5) for individually measuring a charging current (Iᵢₛₜ) supplied to each plug element (4, 5) and **in that** the measurement units (20, 21) cooperate with the central control unit (11) in such a way that the charging current (Iᵢₛₜ) is directly or indirectly monitored and measures to increase the safety of the system are initiated in the event of a fault.

2. Device according to claim 1, **characterised in that** a computation module (14) of the central control unit (11) and computation modules (15, 16) of the decentralised control units (12, 13) are configured in such a way that program routines of the same type for operating the device can be executed on the computation module (14) of the central control unit (11) and/or on at least one computation module (15, 16) of a decentralised control unit (12, 13).

3. Device according to either claim 1 or claim 2, **characterised in that** the central control unit (11) has a safety data store (17), which is formed in such a way that results data of program routines which have been executed by the decentralised control unit (12, 13) are stored in the safety data store (17) and/or **in that** a decentralised control unit (12, 13) has a safety data store (18, 19) which is configured in such a way that results data of program routines which have been executed by the central control unit (11) are stored in the safety data store (18, 19).

4. Device according to any of claims 1 to 3, **characterised in that** the measurement units (20, 21) are formed as current measurement units and/or as power measurement units.

## Revendications

1. Dispositif destiné à la mise à disposition d'énergie électrique pour des véhicules pouvant fonctionner à l'électricité, avec au moins un élément enfichable (4, 5), selon lequel l'au moins l'élément enfichable (4, 5) est raccordé de manière conductrice à un câble d'alimentation (1) fixe et peut être raccordé à l'accumulateur d'énergie du véhicule par l'intermédiaire d'un élément enfichable antagoniste ; avec au moins un mécanisme de commutation (6) destiné à la mise en circuit et hors circuit individuelle de l'au moins un élément enfichable (4, 5) ; et avec un mécanisme de commande (7) qui interagit, du point de vue de la technique des données, avec l'au moins un élément enfichable (4, 5) et avec le mécanisme de commutation (6), selon lequel le mécanisme de commande (7) présente une unité de commande (11) centralisée et un nombre d'unités de commande (12, 13) décentralisées correspondant au nombre d'éléments enfichables (4, 5) ; selon lequel une unité de commande (12, 13) décentralisée est associée à chaque élément enfichable (4, 5) ; et selon lequel l'unité de commande (11) centralisée est raccordée, du point de vue de la technique des données, à toutes les unités de commande (12, 13) décentralisées, **caractérisé en ce que** l'unité de commande (11) centralisée est raccordée, du point de vue de la technique des données, à un nombre d'unités de mesure (20, 21) correspondant au nombre d'éléments enfichables (4, 5) en vue de la mesure individuelle d'un courant de charge (Iᵢₛₜ) délivré à chaque élément enfichable (4, 5) ; et **caractérisé en ce que** les unités de mesure (20, 21) interagissent de telle sorte avec l'unité de commande (11) centralisée que le courant de charge (Iᵢₛₜ) est surveillé directement ou indirectement et que des mesures sont déclenchées en cas d'erreur, en vue de l'accroissement de la sécurité du système.

2. Dispositif selon la revendication 1, **caractérisé en ce qu'**un module de calcul (14) de l'unité de commande (11) centralisée et des modules de calcul (15, 16) des unités de commande (12, 13) décentralisées sont configurés de telle sorte que des routines de programmes de même nature, lesquelles sont destinées à faire fonctionner le dispositif, sont exécutables sur le module de calcul (14) de l'unité de commande (11) centralisée et/ou sur tout au moins un module de calcul (15, 16) d'une unité de commande (12, 13) décentralisée.

3. Dispositif selon la revendication 1 ou 2, **caractérisé en ce que** l'unité de commande (11) centralisée présente une mémoire de données de sécurité (17), laquelle est conçue de telle sorte que des données de résultat des routines de programmes, lesquelles sont exécutées par l'unité de commande (12, 13) décentralisée, sont archivées dans la mémoire de données de sécurité (17) ; et/ou **caractérisé en ce que** tout au moins une unité de commande (12, 13) décentralisée présente une mémoire de données de sécurité (18, 19), laquelle est configurée de telle sorte que des données de résultat des routines de programmes, lesquelles sont exécutées par l'unité de commande (11) centralisée, sont archivées dans la mémoire de données de sécurité (18, 19).

4. Dispositif selon l'une des revendications 1 à 3, **caractérisé en ce que** les unités de mesure (20, 21) sont conçue sous la forme d'unités de mesure du courant et/ou sous la forme d'unités de mesure de la puissance.
